# DEMANDE DE BREVET EUROPEEN

(11) **EP 3 993 312 A1**
(43) Date de publication de la demande: **04.05.2022**
(21) Numéro de dépôt: 21202803.9
(22) Date de dépôt: 15.10.2021
(51) Int. Cl.: H04L 9/08, H04B 10/70

(54) **PROCEDE DE SECURISATION DE TRANSMISSION DE DONNEES SATELLITAIRES ET SYSTEME DE TRANSMISSION ASSOCIE**

(30) Priorité: 29.10.2020 FR 2011072
(71) Demandeur: THALES, 92400 Courbevoie (FR)
(72) Inventeur: GAYRARD, Jean-Didier, 31100 TOULOUSE (FR)
(74) Mandataire: Marks & Clerk France

(57) **Abrégé**

L'invention porte sur un procédé de transmission sécurisée dans un système satellitaire comprenant au moins un satellite (SAT), un centre de mission (CM), et une station de communication quantique (SQKD) configurée pour mettre en œuvre un canal de communication (CQu) optique avec le satellite et reliée au centre de mission par une liaison sécurisée (Lsec). Le procédé comprend :
- une étape (401) d'échange quantique d'au moins une clé secrète (CQj) entre le satellite et le centre de mission en utilisant le canal de communication de la station de communication quantique, et
- une étape (402) de transmission d'au moins un fichier de clés secrètes (CSi) chiffré par une méthode de chiffrement utilisant ladite clé secrète (CQj).

L'invention porte également sur les équipements mettant en œuvre le procédé.

## Description

### Domaine technique :

Le domaine technique de l'invention est celui de la sécurisation des transmissions de données dans des systèmes satellitaires, dans le cas d'un satellite transmettant des données au sol vers un centre de mission en charge d'exploiter ces données. L'invention est présentée dans le cadre d'un système d'observation de la terre par satellite de télédétection, mais s'applique de manière identique pour tout type de système satellitaire (satellites de météorologie, satellites scientifiques, etc...). Elle porte plus particulièrement sur le sous-système de transmission des données collectées par le satellite, typiquement des images, vers les utilisateurs au sol, appelé système de télémesure Instrument, et sur une méthode permettant la sécurisation de ces données de manière à garantir leur confidentialité, leur intégrité et leur authenticité.

### Technique antérieure :

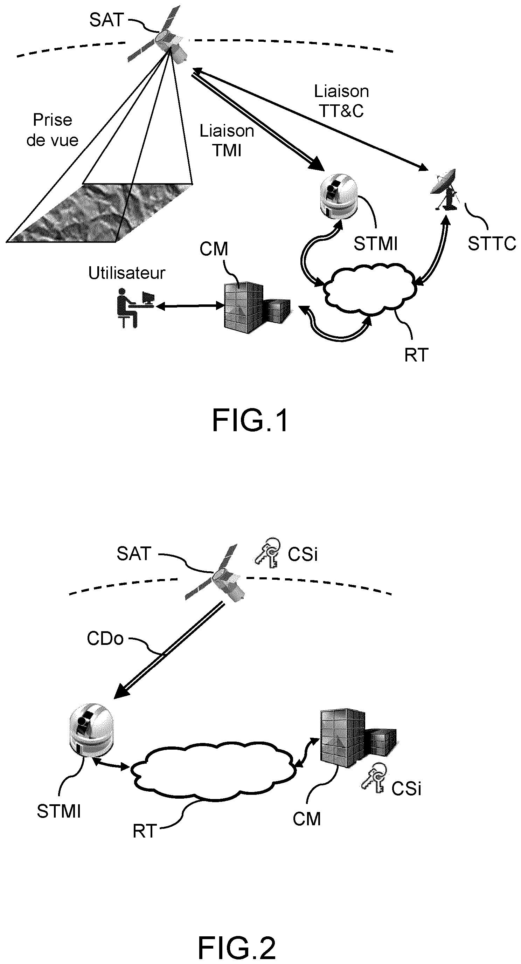

La figure 1 représente le schéma général d'un système d'observation de la terre par satellite de télédétection selon l'état de l'art. Le système comprend un ou plusieurs satellites géostationnaires ou défilants de télédétection (SAT) porteurs d'un instrument ou senseur (optique, radar), une ou plusieurs stations terrestres (STMI) dites de télémesures instrument ou de TMI (acronyme pour TéléMesures Instrument), un centre de mission (CM), configuré pour récupérer et traiter les données de télédétection transmises par le satellite, et d'utilisateurs reliés au centre de mission. Le centre de mission est un équipement centralisé proche des utilisateurs ne disposant pas de liaison permettant de communiquer directement avec le satellite, et relié à des stations sol disposant d'une liaison avec le satellite. Par la suite, les données générées par les instruments ou senseurs du satellite de télédétection seront appelées indifféremment données de télédétection ou données de télémesures instrument ou données de TMI. La liaison entre le satellite SAT et la station de TMI (STMI) est généralement opérée par une liaison optique unidirectionnelle mais peut de manière équivalent être opérée par une liaison radiofréquence et/ou une liaison bidirectionnelle. Eventuellement, le système inclut une ou plusieurs stations terrestres (STTC) dites de télémesure / télécommande ou TTC (acronyme anglais pour *Telemetry Tracking and Command)* pour contrôler le satellite et programmer sa mission (par exemple la programmation des prises de vue). Le centre de mission, les stations de TMI et les stations de TTC constituent la composante terrestre du système satellitaire, et communiquent à travers un réseau terrestre de communications (RT), par exemple un réseau privé ou internet. Le satellite prend des clichés (images) avec ses instruments, éventuellement traite les images (compression), les stocke dans sa mémoire puis les transmet à une station de TMI lors du passage en visibilité de celle-ci. La station de TMI envoie les images au centre de mission par le réseau terrestre de communications. Le centre de mission traite les images reçues des satellites et les distribue aux utilisateurs.

De manière à garantir la confidentialité, l'intégrité et l'authenticité des données de télédétection (typiquement des images) échangées, il est connu de sécuriser la liaison entre le satellite et le centre de mission.

Une méthode classique de sécurisation des données d'images consiste à chiffrer les données de télédétections par un algorithme de cryptographie à clés symétriques ou secrètes (par exemple AES, acronyme anglais pour *Advanced Encryption Standard)* qui changent de manière régulière. Ce type de chiffrement est réputé inviolable aux attaques par force brute dans un temps fini (< million d'années).

La figure 2 représente un schéma selon l'état de l'art du sous-système de transmission des données d'observation (typiquement des images) vers le centre de mission, dans lequel les données de télédétection sont sécurisées par un algorithme de chiffrement à clés symétriques ou secrètes CSi. Le satellite de télédétection (SAT) chiffre les données de télédétection (des images par exemple) avec des clés secrètes CSi utilisant un algorithme de chiffrement à clés symétrique. Le satellite (SAT) transmet les données chiffrées à une station de TMI, qui les renvoie au centre de mission (CM) via le réseau terrestre de communication (RT). Le centre de mission (CM) déchiffre les données en utilisant les clés secrètes CSi. Ainsi, les données sont chiffrées de bout en bout, et un observateur tiers interceptant les données transmises sur la liaison de données CDo ou les données transmises sur le réseau terrestre n'est pas en mesure de déchiffrer leur contenu.

Les clés secrètes CSi doivent être changées régulièrement de manière à contrer de potentielles compromissions. Pour ceci, l'émetteur et le récepteur des données chiffrées doivent échanger ou partager la ou les clés secrètes CSi servant au chiffrement et au déchiffrement. Le point faible de ce système repose donc sur l'échange des clés secrètes entre le satellite qui chiffre les données et le centre de mission qui les déchiffre.

Une première solution connue au problème du partage des clés entre le satellite et le centre de mission consiste à générer et répertorier un ensemble de clés secrètes en début de vie du système d'observation par satellite. Ainsi le fichier de clés secrètes est stocké dans la mémoire du satellite avant son lancement en orbite, et dans une mémoire protégée du centre de mission. Les clés sont utilisées au fur et à mesure des besoins tout au long de la vie du satellite pour sécuriser la transmission des fichiers de données. Cette solution a l'inconvénient de présenter un risque de compromission des clés secrètes du centre de mission, c'est-à-dire une situation où les clés sont exposées et connues d'un tiers malveillant. La compromission des clés cryptographiques implique la perte de la sécurité des transmissions des fichiers d'images jusqu'à la fin de la vie du satellite.

Pour pallier au risque de compromission des clés du centre de mission, une autre solution fréquemment utilisée consiste à télécharger à la demande de nouvelles clés secrètes dans le satellite (en anglais *Over-the-air Rekeying*) à partir d'une station de TTC. La technique de téléchargement dans le satellite de nouvelles clés secrètes fait appel à un algorithme de cryptographie à clés asymétriques (à clés publiques et privées). Par exemple, le satellite génère une clé publique et une clé privée, et envoie la clé publique au centre de mission. Le centre de mission génère et répertorie des clés secrètes (clés symétriques) dans un fichier, chiffre le fichier de clés secrètes avec la clé publique et envoie le fichier de clés chiffré au satellite via la station de TTC. Le satellite déchiffre le fichier grâce à sa clé privée. Ainsi, la création et le partage des clés secrètes est fait de façon anticipée sur la future utilisation des clés. Les clés sont changées régulièrement et la compromission des clés du centre de mission n'est plus un point de faiblesse.

Toutefois, la phase d'envoi de fichiers de clés secrètes par un algorithme de chiffrement à clés publiques/privées présente également une faille de sécurité. En effet, les experts estiment que d'ici moins de 20 ans les ordinateurs quantiques seront aptes à "casser" en un temps très court (< 1 an), les algorithmes de cryptographie asymétrique à clés privés/publiques (par exemple les algorithmes de type RSA (du nom de ses trois inventeurs : Ronald Rivest, Adi Shamir et Leonard Adleman), les algorithmes de Diffie Hellman ou les algorithmes par Courbes Elliptiques). Ainsi, un tiers malveillant muni d'un système d'écoute et d'enregistrement des liaisons satellites ou du réseau terrestre et d'un ordinateur quantique pourrait reconstruire la clé privée, déchiffrer le fichier des clés secrètes et ainsi accéder aux données images qu'il aurait écoutées et enregistrées.

Un objet de l'invention est donc de résoudre la faille de sécurité identifiée dans les systèmes satellitaires de l'art antérieur en proposant un procédé de transmission de fichiers de clés secrètes garantissant la confidentialité, l'intégrité et l'authenticité des fichiers de clés secrètes échangées entre le satellite et le centre de mission. L'invention s'étend à la sécurisation des transferts de données entre le satellite et le centre de mission. Pour ceci, elle décrit un procédé de transmission opérant en deux temps :
- d'abord un échange de fichiers de clés sécrètes entre le satellite et le centre de mission utilisant un procédé d'échange de fichiers de clés selon l'invention et
- ensuite la transmission des données chiffrées de télédétection du satellite vers le centre de mission.

Le procédé sécurisé de transmission de clés secrètes selon l'invention repose d'une part sur un échange quantique de clés (en anglais *Quantum Key Distribution* ou QKD), et d'autre part sur le chiffrement de fichiers de clés secrètes par un algorithme de cryptographie à clés symétriques (secrètes). Ces dernières clés secrètes permettent de sécuriser de bout en bout la liaison transportant les données (par exemple des images) entre le satellite et le centre de mission.

Ainsi l'invention pallie à la faille de sécurité de l'art antérieur que constitue le chiffrement des fichiers de clés secrètes par un algorithme de cryptage à clés asymétriques privées/publiques.

### Résumé de l'invention :

A cet effet, l'invention porte sur un procédé de transmission sécurisée entre un centre de mission et un satellite dans un système satellitaire comprenant au moins un satellite, un centre de mission, et une station de communication quantique configurée pour mettre en œuvre un canal de communication optique unidirectionnel en espace libre avec le satellite, la station de communication quantique étant reliée au centre de mission par une liaison sécurisée. Le procédé comprend :
- une étape d'échange quantique d'au moins une clé secrète entre le satellite et le centre de mission en utilisant le canal de communication optique unidirectionnel de la station de communication quantique, et
- une étape de transmission d'au moins un fichier de clés secrètes entre le centre de mission et le satellite, ledit fichier de clés secrètes étant chiffré par une méthode de chiffrement utilisant ladite clé secrète.

Le procédé décrit permet la transmission d'un fichier de clés secrètes entre le centre de mission et le satellite, ces clés pouvant être ensuite utilisées pour crypter des données échangées entre le satellite et le centre de mission.

Dans un mode de réalisation du procédé, l'étape d'échange quantique d'au moins une clé secrète entre le satellite et le centre de mission comprend l'échange de données sur un canal de protocole radiofréquence bidirectionnel en espace libre entre le satellite et une station de télémesures télécommande reliée au centre de mission.

Dans un autre mode de réalisation du procédé, l'étape d'échange quantique d'au moins une clé secrète entre le satellite et le centre de mission comprend l'échange de données sur un canal de protocole optique bidirectionnel en espace libre entre le satellite et la station de communication quantique.

Selon un mode de réalisation, le procédé décrit comprend en outre :
- une étape de chiffrement des données à transmettre par le satellite par une méthode de chiffrement utilisant une ou plusieurs clés secrètes dudit fichier de clés secrètes, et de transmission des données chiffrées vers le centre de mission.

L'invention porte également sur un satellite dans un système satellitaire comprenant au moins un satellite, un centre de mission, une station de communication quantique reliée au centre de mission par une liaison sécurisée, et une station de télémesures instrument reliée au centre de mission. Le satellite décrit comprend :
- des moyens pour la mise en œuvre d'un canal quantique unidirectionnel avec la station de communication quantique par une liaison optique en espace libre, et
- des moyens pour la mise en œuvre d'un canal de protocole avec une station de télémesures télécommande reliée au centre de mission ou avec la station de communication quantique par une liaison bidirectionnelle en espace libre.

Les moyens pour la mise en œuvre d'un canal quantique unidirectionnel et les moyens pour la mise en œuvre d'un canal de protocole sont configurés pour permettre l'échange quantique d'au moins une clé secrète avec le centre de mission. Il comprend en outre :
- des moyens pour la mise en œuvre d'un canal de clés par une liaison en espace libre, configurés pour permettre la réception d'au moins un fichier de clés secrètes chiffré transmis par le centre de mission, et des moyens de déchiffrement dudit au moins un fichier de clés secrètes chiffré, et
- des moyens pour la mise en œuvre d'un canal de données avec la station de télémesures instrument par une liaison en espace libre, configurés pour permettre le chiffrement et la transmission de données vers le centre de mission.

Le satellite est configuré pour mettre en œuvre les étapes propres au satellite dans un procédé de transmission sécurisée de données selon l'invention.

Dans un mode de réalisation, il comprend des moyens permettant le partage d'une liaison optique en espace libre entre le canal quantique et le canal de données.

Avantageusement, les moyens pour la mise en œuvre d'un canal de protocole comprennent des moyens de modulation/démodulation de balises de pointage destinés à l'orientation d'un télescope du satellite et de télescopes des stations terrestres.

L'invention porte également sur une composante sol pour réseau satellitaire comprenant un centre de mission configuré pour déchiffrer des données transmises par un satellite, et une station de télémesures instrument configurée pour mettre en œuvre d'un canal de données avec le satellite par une liaison en espace libre, recevoir des données transmises par le satellite et transmettre lesdites données transmises par le satellite au centre de mission par un réseau terrestre. La composante sol selon l'invention comprend en outre une station de communications quantique configurée pour mettre en œuvre un canal de communications optique unidirectionnel en espace libre avec le satellite permettant l'échange quantique d'au moins une clé secrète avec le satellite, et pour transmettre ladite au moins une clé secrète au centre de mission à travers une liaison de communications sécurisée. En outre, le centre de mission comprend des moyens permettant le chiffrement d'au moins un fichier de clés secrètes par une méthode de chiffrement utilisant ladite au moins une clé secrète. La composante sol comprend enfin des moyens de transmission dudit au moins un fichier de clés secrètes vers le satellite, et est configurée pour mettre en œuvre les étapes propres à la composante terrestre dans un procédé de transmission sécurisée de données selon l'invention.

Dans un mode de réalisation, les moyens de transmission dudit au moins un fichier de clés secrètes vers le satellite de la composante sol comprennent une station de télémesures télécommande configurée pour mettre en œuvre un canal de clés par une liaison en espace libre avec le satellite.

De manière alternative, les moyens de transmission dudit au moins un fichier de clés secrètes vers le satellite comprennent des moyens de modulation/démodulation de balises de pointage destinées à l'orientation d'un télescope de la station de d'échange quantique configurés pour permettre la mise en œuvre d'un canal de clés par une liaison en espace libre avec le satellite.

Enfin, l'invention porte sur un réseau satellitaire comprenant un satellite selon l'invention et une composante sol pour réseau satellitaire selon l'invention.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :
- la figure 1 représente le schéma général d'un système d'observation de la terre par satellite de télédétection selon l'état de l'art,
- la figure 2 représente un schéma selon l'état de l'art du sous-système de transmission des données d'observation vers le centre de mission,
- la figure 3 représente un système de télémesures instrument pour satellite de télédétection selon un mode de réalisation de l'invention,
- la figure 4 représente les étapes d'un procédé de transmission sécurisée de données dans un système de télémesures instrument pour satellite de télédétection selon un mode de réalisation de l'invention,
- la figure 5 représente un exemple d'architecture d'un satellite de télédétection permettant la mise en œuvre d'une méthode de transmission sécurisée de fichiers de clés secrètes et de données selon un mode de réalisation de l'invention,
- la figure 6 représente un exemple d'architecture de la composante terrestre d'un système de télémesures instrument pour satellite de télédétection selon un mode de réalisation de l'invention,
- la figure 7 représente un système de télémesures instrument pour satellite de télédétection selon un autre mode de réalisation l'invention,
- la figure 8 représente un exemple d'architecture d'un satellite de télédétection permettant la mise en œuvre d'une méthode de transmission sécurisée de fichiers de clés secrètes et de données selon un mode de réalisation de l'invention,
- la figure 9 représente un exemple d'architecture d'un satellite de télédétection permettant la mise en œuvre d'une méthode de transmission sécurisée de fichiers de clés secrètes et de données selon un autre mode de réalisation de l'invention,
- la figure 10 représente un exemple d'architecture de la composante terrestre dans un système sécurisé de télémesures instrument pour satellite de télédétection selon un mode de réalisation de l'invention.

Des références identiques peuvent être utilisées dans des figures différentes lorsqu'elles désignent des éléments identiques ou comparables.

### Description détaillée :

Le procédé selon l'invention s'appuie sur l'échange ou partage quantique de clés (QKD). Les technologies et les protocoles d'échange quantique de clés sur des liaisons par fibre optique ont été mises au point ces dernières années. Récemment, des liaisons quantiques en espace libre entre un satellite et des stations terrestres ont été réalisées.

Les échanges quantiques de clés permettent à deux dispositifs de générer une clé partagée connue d'eux seuls. Les échanges de clés quantiques requièrent l'utilisation de deux canaux de transmission distincts : un canal de transmission dit « quantique » utilisant une liaison optique en espace libre, et un canal de transmission dit « de protocole » utilisant une liaison radiofréquence pour le contrôle du canal quantique et l'application d'un protocole spécifique. En particulier, le canal de protocole sert entre autres à l'échange de données de réconciliation et de vérification des clés (plus connu sous le terme anglais de *Information reconciliation and privacy amplification*)*.* Deux grands types de protocoles d'échange de clés quantiques sont connus : les protocoles de type "*Prepare et Mesure*" (P&M) et les protocoles de type *"par paire de photons intriqués"* (en anglais *Entanglement*)*.*

Dans le cas d'un protocole de type P&M, un premier équipement (par exemple un satellite) émet sur le canal quantique une suite de photons dont l'état quantique, état ϕ0 ou état ϕ1 (donné par exemple par la polarisation des photons), est déterminé par une séquence aléatoire générée localement. Un deuxième équipement (par exemple la station d'Alice) reçoit cette suite de photons et mesure l'état quantique de chaque photon en le dirigeant soit vers un appareil mesurant un état quantique ϕ0, soit vers un appareil mesurant un état ϕ1. Le choix de l'appareil de mesure est déterminé par une séquence aléatoire générée localement (donc différente de celle du satellite). Lorsque l'appareil mesurant un état quantique ϕ1 du deuxième équipement mesure un photon en état ϕ0, il considère le photon comme perdu. Le deuxième équipement établit la liste des mesures effectuées, qui sont soit l'état ϕ0, soit l'état ϕ1, soit absence de photon. Les mesures « absence de photon » interviennent soit dans le cas où le photon s'est perdu pendant la transmission (absorption par le milieu, diffraction changeant la destination, capture par un équipement tiers,...), soit dans le cas où l'état quantique du photon ne correspond pas à l'appareil de mesure sélectionné. Les mesures état ϕ0 et état ϕ1 interviennent lorsque l'état du photon correspond à l'appareil de mesure sélectionné.

A l'issue de cette phase de transmission de photons par le canal quantique, la phase de réconciliation commence, durant laquelle le premier équipement transmet au deuxième équipement la séquence des états quantiques de la suite de photons transmis par le canal de protocole. Le deuxième équipement transmet au premier équipement, toujours par le canal de protocole, la liste des mesures effectuées. A partir des informations échangées (séquence des états et liste des mesures), les deux équipements sont capables de déterminer une séquence commune correspondant uniquement aux cas où l'état transmit et l'état mesuré sont identiques. Cette séquence commune a une nature aléatoire et sert à constituer une clé secrète symétrique connue uniquement des deux équipements, le principe de la transmission quantique garantissant que les photons reçus n'ont pas été interceptés par un tiers observateur. Un exemple de protocole de type P&M connu est le protocole BB84.

Avantageusement, les étapes de transmission de photons sur le canal quantique et le canal de protocole peuvent être mises en œuvre simultanément.

Dans le cas d'un protocole de type par paire de photons intriqués, une suite de paires de photons intriqués est générée soit par le premier équipement, soit par le deuxième équipement, soit par une source distincte des deux équipements. Un photon de la paire est transmis au premier équipement, l'autre photon de la paire est transmis au deuxième équipement, les acheminements de photons se faisant par le canal quantique. Les deux équipements mesurent l'état du photon reçu par un appareil de mesure piloté par une séquence aléatoire. Du fait du phénomène d'intrication quantique, les deux photons ont le même état. Une phase de réconciliation et de vérification des clés par le canal de protocole permet de définir conjointement une clé commune symétrique. Des exemples de protocole par paire de photons intriqués connus sont le protocole E91 et le protocole BBM92.

Bien que l'échange quantique de clés par une liaison par satellite permette de partager de manière sécurisée des clés secrètes, ce procédé est long et complexe à mettre en œuvre, et n'est pas adapté pour la transmission d'une série de clés secrètes.

Dans le procédé d'échange de clés selon l'invention, des fichiers de clés secrètes utilisées pour les transmissions des données de TMI sont chiffrés par un algorithme de cryptographie à clés symétriques, dont les clés cryptographiques sont partagées par échange quantique de clés. Avantageusement, ces clés secrètes peuvent servir à sécuriser les données de télémesures et de télécommandes (TTC) du satellite, comme par exemple le plan de prise de vue.

L'invention décrite ci-après s'applique quel que soit le type de protocole utilisé : bien que la description fasse référence à un protocole P&M, l'invention s'applique de manière identique pour un protocole à paire de photons intriqués ou tout autre protocole.

En outre, la suite de la description part du principe qu'une seule clé sécrète est échangée par voie quantique, mais l'invention s'applique de manière équivalente lorsque plusieurs clés sont échangées par voie quantique et utilisées pour chiffrer les fichiers de clés secrètes transmis, par exemple en utilisant une clé par fichier de clés transmis, ou en morcelant les fichiers de clés transmis et en utilisant une clé par morceau.

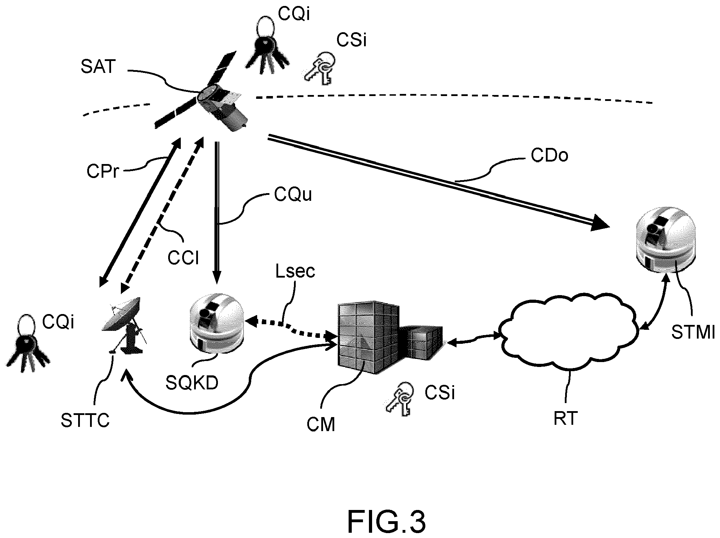

La figure 3 représente un système de télémesures instrument pour satellite de télédétection selon un mode de réalisation de l'invention. Il comprend les éléments de la figure 1, à savoir un satellite de télédétection (SAT), un centre de mission (CM) connecté par une liaison terrestre sécurisée ou non à une station de TTC (STTC), et une ou plusieurs stations de TMI avec lesquelles le centre de mission est interconnecté via un réseau terrestre de communications (RT). Il comprend en outre une station de communications quantiques (SQKD), reliée au centre de mission par une liaison terrestre sécurisée (Lsec). La liaison sécurisée (Lsec) peut être par exemple une liaison dédiée protégée des intrusions, ou une transmission chiffrée sur le réseau terrestre de communications. La station de QKD communique avec la station de TTC, soit directement à travers le réseau terrestre ou une liaison dédiée, soit par l'intermédiaire du centre de mission. Le satellite et le centre de mission sont équipés de serveurs de clés pour générer, répertorier et stocker des clés et pour distribuer localement des clés secrètes au module de chiffrement du satellite et au module de déchiffrement du centre de mission afin de sécuriser le transport des données de télédétections (images par exemple).

Le satellite est équipé d'un module émission de communication quantique apte à établir une liaison optique en espace libre avec une station terrestre de communication quantique (station QKD) dans le cadre d'un échange quantique de clés CQj. La station de TTC dispose d'une liaison radiofréquence (ou optique) bidirectionnelle avec le satellite. Avantageusement, la station de TTC et la station QKD peuvent être mises en œuvre par un même équipement, configuré pour réaliser à la fois le rôle de station de QKD (pour l'échange quantique de clé secrète) et de station de TTC.

Le système sécurisé de télémesures instrument pour satellite de télédétection selon l'invention comprend quatre canaux de communication :
- un canal de données (CDo) pour la transmission de données de télédétection chiffrées entre le satellite et une station de TMI. Ce canal de données utilise avantageusement une liaison optique en espace libre mais peut également être mis en œuvre à travers une liaison radiofréquence. Le canal peut être unidirectionnel, comme c'est généralement le cas pour les systèmes de télémesures, ou bidirectionnel de manière par exemple à acquitter la transmission des paquets de données ;
- un canal quantique (CQu) unidirectionnel d'échange quantique de clés, du satellite vers la station QKD ou inversement, pour la transmission d'états quantiques de photons porteurs d'informations permettant d'établir des clés CQj partagées entre le satellite et la station QKD. Le canal quantique (CQu) utilise une liaison optique en espace libre ;
- un canal de protocole (CPr) bidirectionnel entre le satellite et la station de TTC, pour la transmission de données de protocole, de réconciliation et de vérification des clés CQj, nécessaire à l'échange quantique des clés. Le canal de protocole (CPr) utilise la liaison radiofréquence de la station de TTC ;
- un canal de clés (CCI) unidirectionnel ou bidirectionnel pour la transmission de fichiers chiffrés de clés secrètes (CSi) entre le centre de mission et le satellite via la station de TTC. Le canal de clés (CCI) utilise la liaison radiofréquence de la station de TTC.

Un canal de transmission correspond à une liaison entre deux équipements permettant d'échanger des informations. Des canaux distincts peuvent être mis en œuvre au travers d'une même liaison de transmission, ou de liaisons de transmission distinctes.

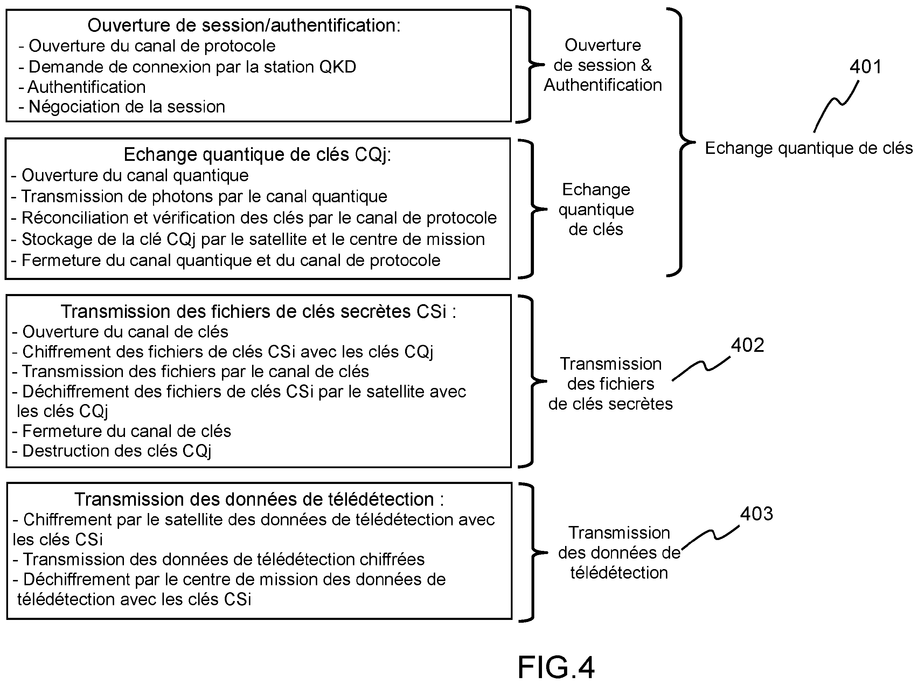

La figure 4 représente les étapes d'un procédé de transmission sécurisée de données dans un système de télémesures instrument pour satellite de télédétection selon un mode de réalisation de l'invention. Le procédé comprend :
- une étape 401 d'échange quantique de clés entre le satellite et le centre de mission via le canal quantique CQu et le canal de protocole CPr. A l'issue de cette étape d'échange quantique de clés, le satellite et la station de SQKD sont dépositaires d'une clé symétrique ou secrète CQj destinée à la mise en œuvre de la deuxième étape du procédé. Cette clé est transmise au centre de mission (CM) par la liaison sécurisée Lsec. Dans la suite, sera désignée sous le nom de « clé quantique » la clé sécrète CQj échangée par voie quantique entre le satellite et la station de QKD, et transmise au centre de mission ;
- une étape 402 de transmission d'un ou plusieurs fichiers de clés secrètes CSi entre le centre de mission et le satellite via le canal de clés CCI. Les fichiers de clés secrètes CSi sont générés et répertoriés par le centre de mission qui les chiffre en utilisant la « clé quantique » CQj avant de les transmettre au satellite. Le satellite déchiffre le ou les fichiers de clés secrètes CSi en utilisant la « clé quantique » CQj. A l'issue de cette phase de transmission de fichiers de clés secrètes, le satellite et le centre de mission sont dépositaires d'un jeu de clés secrètes CSi communes destinées à la transmission chiffrée de données de télédétection du satellite au centre de mission.

Plus précisément, l'étape 401 peut comprendre :
- une première phase d'ouverture de session et d'authentification, comprenant :
   - l'ouverture du canal de protocole CPr par le satellite (établissement de la liaison radiofréquence),
   - la demande de connexion au satellite par la station de QKD sur le canal de protocole,
   - l'authentification de la station de QKD,
   - la négociation des paramètres de la session, comme par exemple le nombre de clés, le nombre et la taille des fichiers à transmettre etc...
- une deuxième phase d'échange quantique de clé CQj comprenant :
   - l'ouverture du canal quantique CQu, par le satellite ou la station de QKD selon le sens de la liaison unidirectionnelle optique,
   - la transmission de photons par le canal quantique,
   - la réconciliation et vérification des clés, en conformité avec le protocole QKD choisi, par des échanges entre le satellite et la station de QKD via le canal de protocole,
   - le stockage de la « clé quantique » CQj par le satellite et le centre de mission,
   - la fermeture du canal quantique et du canal de protocole.

A l'issue de cette première étape 401 d'échange quantique de clés, le satellite et le centre de mission disposent d'une ou plusieurs clés CQj leur permettant d'échanger des fichiers de manière sécurisée et robuste aux interceptions.

L'étape 402, au cours de laquelle des fichiers de clés CSi sont transmis, peut comprendre :
- l'ouverture du canal de clés CCI, par le satellite et la station STTC,
- la génération d'un ou plusieurs fichiers de clés CSi par le centre de mission,
- le chiffrement, par le centre de mission, des fichiers de clés CSi en utilisant la « clé quantique » CQj,
- la transmission au satellite des fichiers de clés CSi chiffrés, via la station de TTC en utilisant le canal de clés CCI,
- le déchiffrement des fichiers de clés CSi par le satellite en utilisant la clé CQj, et
- la fermeture du canal de clés.

A l'issue de cette phase, les clés CQj détenues par le satellite et la station STTC peuvent être détruites.

L'utilisation du canal de clés et non de la liaison quantique pour la transmission des fichiers de clés permet de réaliser la transmission de manière efficace et avec une complexité limitée, tout en bénéficiant d'un niveau de protection maximum puisque les fichiers de données transmis sont protégés par une clé secrète connue seulement du satellite et du centre de mission.

Les étapes décrites ci-dessus sont données à titre d'illustration d'un mode de réalisation du procédé selon l'invention, et peuvent être adaptés dans une certaine mesure. Par exemple, les canaux de données peuvent être constamment ouverts, ce qui permet de ne pas avoir à prévoir leur ouverture et leur fermeture, mais est moins efficace en termes de consommation d'énergie par la charge utile du satellite. De même, l'authentification des équipements est facultative mais permet de garantir la sécurité des transmissions face à des attaques de type « intermédiaire » (en anglais *men in the middle*)*.*

Le procédé de transmission sécurisée de fichiers de clés secrètes dans un système de télémesures instrument selon l'invention s'inscrit dans un procédé plus large de transmission sécurisée de données, comprenant l'échange de fichiers de clés secrètes selon un mode de réalisation de l'invention, suivi d'une étape 403 de :
- chiffrement, par le satellite, de données de télédétection en utilisant une ou plusieurs des clés secrète CSi contenu dans le ou les fichiers de clés secrètes,
- transmission des données de télédétection chiffrées entre le satellite et le centre de mission via le canal de données CDo, une station de TMI et le réseau terrestre, et
- déchiffrement, par le centre de mission, des données de télédétection.

Dans le cas d'un satellite défilant, les différentes étapes du procédé de transmission sécurisée de fichiers de clés secrètes et de données selon l'invention sont mises en œuvre au fur et à mesure du passage du satellite en visibilité des équipements concernés.

Le procédé de transmission sécurisée de fichiers de clés secrètes et de données selon l'invention s'appuie en grande partie sur les liens de communication et les équipements existants des systèmes d'observation par satellite de l'état de l'art. Il est donc particulièrement adapté pour ces applications, puisqu'il ne requiert que l'ajout sur le segment sol d'une station de communications quantiques (SQKD), utilisée pour l'échange quantique de clés. En outre, le recours au canal quantique peut s'avérer long, complexe et coûteux. Dans le procédé de transmission sécurisée de fichiers de clés secrètes selon l'invention, il n'est fait recours au canal quantique qu'une seule fois, lors de la première étape du procédé, indépendamment du nombre de clés échangés dans les fichiers de clés. Le procédé permet alors de limiter le recours au canal quantique, et ainsi de maîtriser les durées et la complexité de transmission des fichiers de clés.

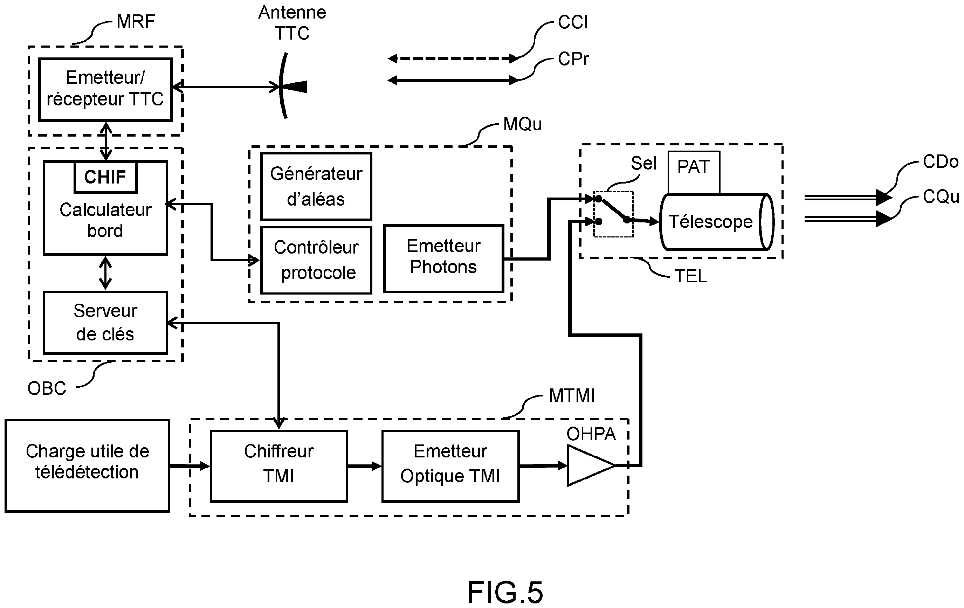

La figure 5 représente un exemple d'architecture d'un satellite de télédétection permettant la mise en œuvre d'un procédé de transmission sécurisée de fichiers de clés secrètes et de données selon un mode de réalisation de l'invention, en lien avec le système satellitaire représenté à la figure 3.

La charge utile du satellite (SAT) comprend :
- un module de communication quantique (MCQ) configuré pour mettre en œuvre le canal quantique CQu à travers une liaison optique en espace libre,
- un module de TMI (MTMI) configuré pour mettre en œuvre le canal de données CDo à travers une liaison optique en espace libre,
- un module de communication radiofréquence de TTC (MRF), configuré pour mettre en œuvre le canal de clés CCI et le canal de protocole CPr à travers une liaison de communications radiofréquence.

Elle comprend en outre un module calculateur (OBC) configuré pour séquencer l'ensemble des opérations, un module télescopique (TEL) configuré pour mettre en œuvre les communications optiques, et une antenne radiofréquence.

Le module de communication quantique MCQ comprend un émetteur d'états quantiques de photons (récepteur lorsque le lien unidirectionnel du canal quantique va de la station de QKD vers le satellite), un générateur de séquences aléatoires, et un contrôleur de protocole, relié au calculateur bord du module OBC. Ces équipements ou fonctions sont conçus en conformité avec le protocole d'échange quantique de clés (QKD) choisi. Le contrôleur de protocole fait le lien entre les photons échangés sur le canal quantique et les données de réconciliation et vérification échangées sur le canal de protocole pour établir la « clé quantique » CQj.

Le module de communication MTMI comprend un module d'émission laser et un amplificateur optique de puissance (OHPA) configuré pour amplifier les signaux optiques émis. Il comprend en outre un chiffreur de TMI, configuré pour chiffrer les données de télédétection transmises par le satellite à l'aide d'une ou plusieurs des clés secrètes CSi.

Le module télescopique (TEL) comprend un télescope, un dispositif de pointage PAT (acronyme anglais pour *Pointing, Acquisition and Tracking*) configuré pour orienter le télescope en direction de la station terrestre d'intérêt, et un sélecteur de canal (Sel), configuré pour connecter le télescope soit avec le module de communication quantique MQu (canal quantique), soit avec le module de communication MTMI (canal de données). Cette disposition avantageuse permet au satellite de mettre en œuvre le canal quantique et le canal de données à travers un même module télescopique TEL, le canal quantique et le canal de données n'étant pas utilisés simultanément par le procédé selon l'invention, afin d'alléger la charge utile du satellite et de diminuer l'ensemble des coûts de fabrication.

Le module calculateur OBC comprend un calculateur de bord incluant un module de déchiffrement configuré pour permettre le déchiffrement des fichiers de clés reçus sur le canal de clés CCI. Il comprend en outre un serveur de clés configuré pour répertorier et stocker la « clé quantique » CQj et les clés secrètes CSi.

Le module de communications radiofréquence de TTC (MRF) comprend un émetteur/récepteur configuré pour moduler/démoduler les données transmises sur le canal de protocole CPr, et démoduler les données chiffrées reçues sur le canal de clés CCI.

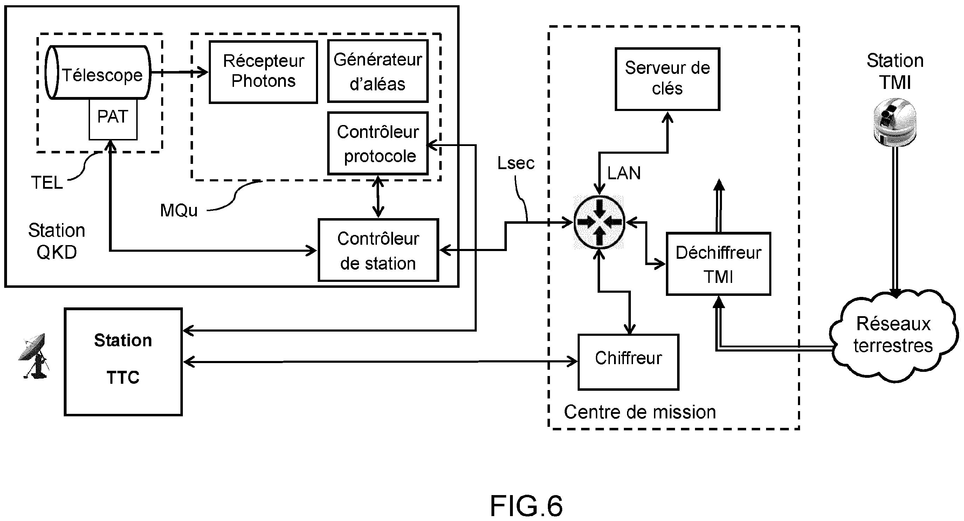

La figure 6 représente un exemple d'architecture de la composante terrestre d'un système de télémesures instrument pour satellite de télédétection selon un mode de réalisation de l'invention, en lien avec la figure 3.

Elle comprend :
- une station de TTC (STTC) disposant d'une liaison de communications radiofréquence avec le satellite ;
- au moins une station de TMI (STMI) disposant d'une liaison de communications optique ou radiofréquence avec le satellite ;
- une station de QKD (SQKD) comprenant :
- un module quantique MQu avec un récepteur d'états quantiques de photons (émetteur lorsque le lien unidirectionnel du canal quantique va de la station QKD vers le satellite), un générateur de séquences aléatoires, et un contrôleur de protocole. Le contrôleur de protocole est relié à la station de TTC à travers un contrôleur de station, et permet faire le lien entre les photons échangés sur le canal quantique et les données de réconciliation et vérification échangées sur le canal de protocole pour établir la « clé quantique » CQj. Le contrôleur de station fait l'interface avec les équipements extérieurs et contrôle les différents modules de la station, en particulier le module télescopique à travers le dispositif de pointage PAT ;
- un module télescopique (TEL) comprenant un télescope et un système de pointage PAT configuré pour orienter le télescope en direction du satellite ;
- un centre de mission (CM) relié aux stations de TMI, à la station de TTC et à la station de QKD. La liaison avec la station QKD est une liaison de données sécurisée (Lsec). Il comprend un serveur de clés configuré pour générer et mémoriser des fichiers de clés secrètes CSi et pour mémoriser la « clé quantique » CQj transmise par la station de QKD, un chiffreur configuré pour chiffrer à l'aide de la « clé quantique » CQj les fichiers de clés secrètes transmis à la station de TTC, et un déchiffreur configuré pour déchiffrer les données de télédétection à l'aide des clés secrètes CSi.

Avantageusement, la liaison de données sécurisée (Lsec) peut être une liaison chiffrée réalisée sur une liaison de communications terrestre filaire, radiofréquence ou optique, en utilisant une clé de chiffrement obtenue par un échange quantique de clés sur une liaison en fibre optique entre la station de QKD et le centre de mission.

Le système décrit permet de mettre en œuvre l'ensemble des traitements nécessaires à l'exécution du procédé de transmission sécurisée de clés et du procédé de transmission sécurisée de données selon l'invention.

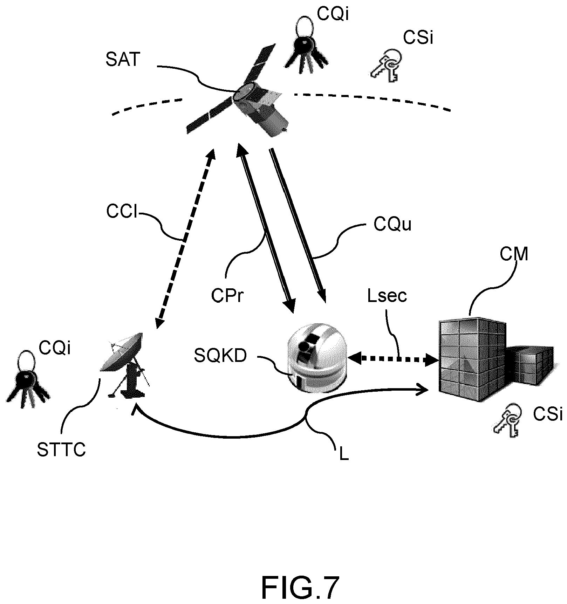

La figure 7 représente un système de télémesures instrument pour satellite de télédétection selon un autre mode de réalisation de l'invention.

Il se distingue de celui représenté à la figure 3 en ce que le canal de protocole CPr n'est pas mis en œuvre par une liaison radiofréquence entre la station de TTC et le satellite, mais par une liaison optique bidirectionnelle entre la station de QKD et le satellite. Il permet de s'affranchir des échanges de données entre la station de QKD et la station de TTC ayant lieu lors de la réconciliation et la vérification des clés afin d'établir la « clé quantique » CQj.

Les étapes du procédé d'échange de clés décrites à la figure 4 restent les mêmes, à l'exception de celles propres au canal de protocole CPr qui sont mises en œuvre par la station de QKD et non par la station de TTC.

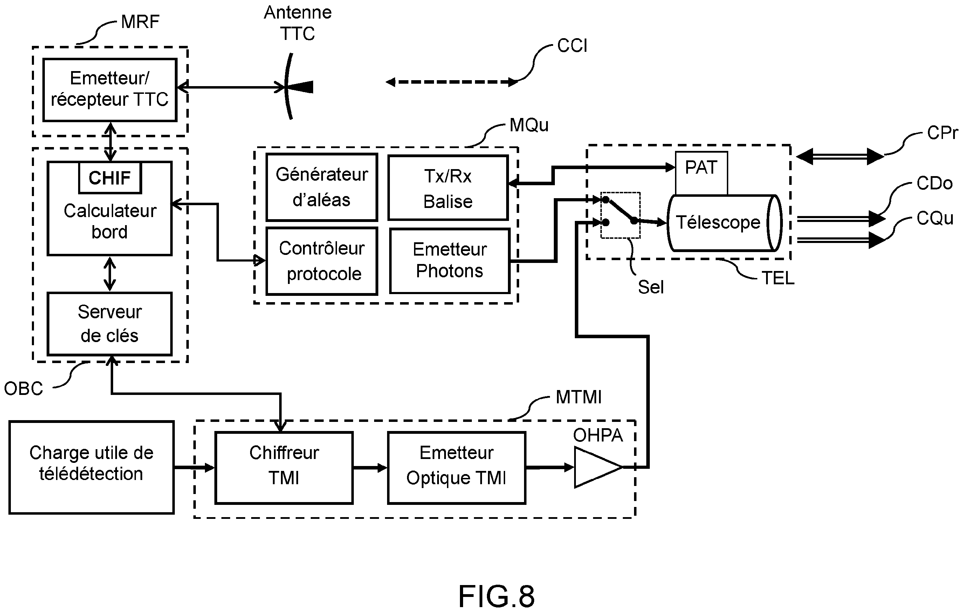

La figure 8 représente un exemple d'architecture d'un satellite de télédétection permettant la mise en œuvre d'une méthode de transmission sécurisée de fichiers de clés secrètes et de données selon un mode de réalisation de l'invention, en lien avec le système satellitaire de la figure 7.

Par rapport à l'exemple donné à la figure 5, le canal de protocole CPr n'est pas assuré par l'émetteur/récepteur du module radiofréquence MRF, mais par un module d'émission/réception du module quantique MQu relié au système de pointage PAT du module télescopique.

Le système de pointage PAT est configuré pour assurer l'acquisition, le pointage et l'alignement des axes optiques des télescopes du satellite et de la station terrestre d'intérêt pendant la durée de la liaison. Ce système comprend l'émission de deux signaux balises : une balise qui est émise par le système de pointage PAT du télescope de la station terrestre et qui est reçue par le système de pointage PAT du télescope du satellite et une balise qui est émise par le système de pointage PAT du télescope du satellite et qui est reçue par le système de pointage PAT du télescope de la station terrestre. Ces balises correspondent à des signaux transmis sur une longueur d'onde optique donnée, permettant aux télescopes d'identifier leur orientation mutuelle par recherche par exemple du maximum de puissance de ces signaux.

Dans ce mode de réalisation, les signaux des balises optiques émis et reçus du système de pointage PAT sont connectés à un module d'émission/réception par modulation des voies balises. Les informations de contrôle échangées sur le canal de protocole CPr afin de réaliser les étapes de réconciliation et de vérification des clés nécessaires à l'établissement de la « clé quantique » CQj, sont transmises en modulant et en démodulant les signaux des balises optiques de pointage. Le canal de protocole montant (de la terre vers l'espace) module la balise du télescope de la station QKD ; le canal de protocole descendant (de l'espace vers la terre) module la balise du télescope du satellite.

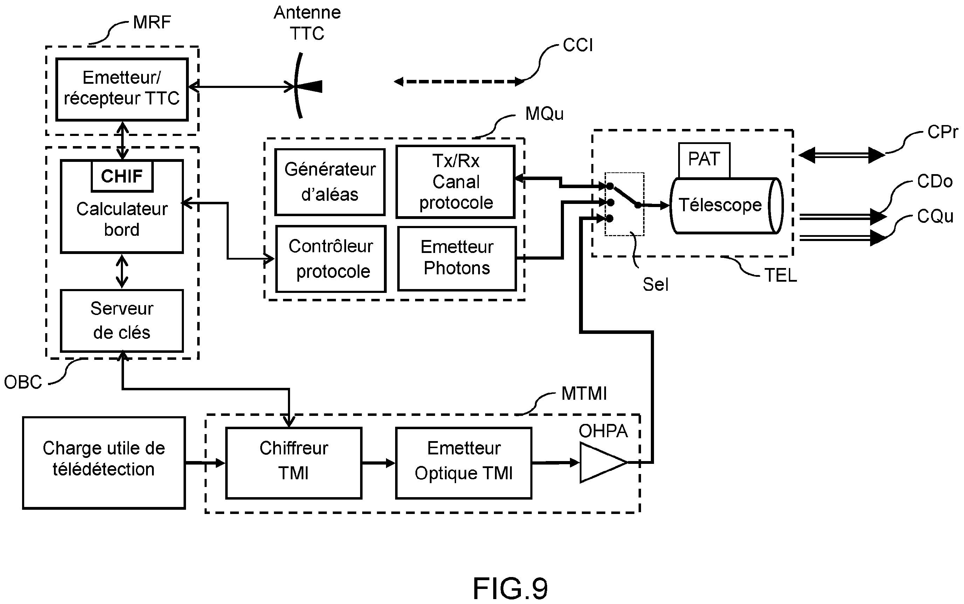

La figure 9 représente un autre exemple d'architecture d'un satellite de télédétection permettant la mise en œuvre d'une méthode de transmission sécurisée de fichiers de clés secrètes et de données selon un mode de réalisation de l'invention, en lien avec le système satellitaire de la figure 7.

Cette architecture se différencie de celle représentée à la figure 8 en ce que le satellite comprend un sélecteur Sel à trois entrées reliées à l'émetteur (ou récepteur) de photons du module quantique, au module de TMI, et à un module d'émission/réception de données du canal de protocole. En effet, dans le procédé selon l'invention, le canal quantique CQu, le canal de protocole CPr et le canal de données CDo peuvent ne pas être sollicités simultanément, ce qui permet d'acheminer les trois canaux successivement à travers le module télescopique TEL.

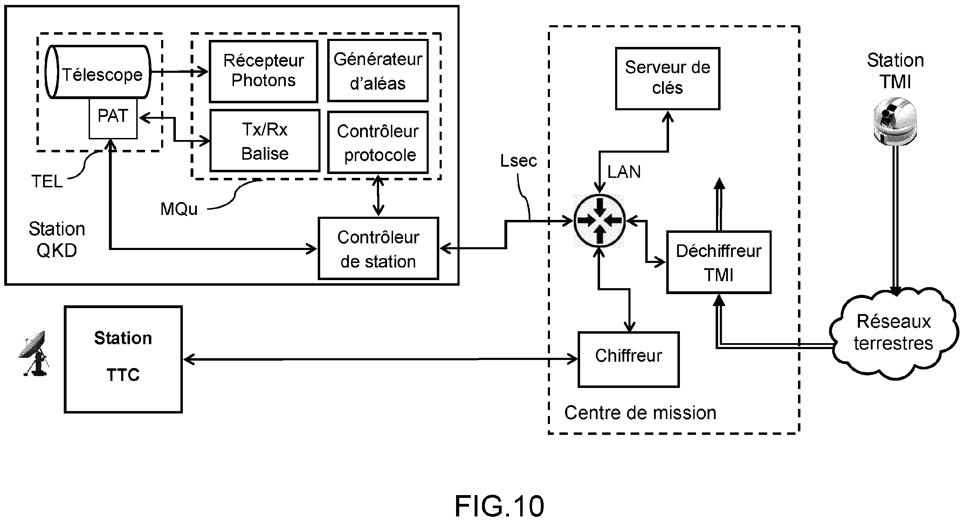

La figure 10 représente un exemple d'architecture de composante terrestre dans un système sécurisé de télémesures instrument pour satellite de télédétection selon un mode de réalisation de l'invention, en lien avec le système satellitaire de la figure 7.

Par rapport à l'architecture de la composante terrestre représentée à la figure 6, la station de QKD comprend un module d'émission/réception dans le module quantique MQu relié au système de pointage PAT du module télescopique, configuré pour moduler/démoduler les balises du système PAT afin d'implémenter le canal de protocole CPr utilisé pour la réconciliation et la vérification des clés quantiques.

D'autres modes de réalisations sont réalisables, qui apparaissent comme des variations évidentes à l'homme du métier des systèmes satellitaires et architectures de dispositifs représentés aux figures 3 et 5 à 10. L'invention cherche à tirer profit des liaisons radiofréquence et optiques des équipements présentes dans les systèmes de télémesures par satellite classiques de manière à limiter le surcoût d'implémentation du procédé selon l'invention, mais de nombreuses variations d'implémentation sont possibles. Par exemple, le canal de données entre le satellite et la station de TMI peut être mis en œuvre par une liaison de communications radiofréquence, qui présente des débits inférieurs mais une plus grande disponibilité qu'une liaison optique. De même, le canal de clés peut être mis en œuvre par une liaison de communications optique, par exemple entre la station de QKD et le satellite, auquel cas la présence de la station de télémesures télécommande (STTC) n'est plus nécessaire.

## Revendications

1. Procédé de transmission sécurisée entre un centre de mission et un satellite dans un système satellitaire comprenant au moins un satellite (SAT), un centre de mission (CM), et une station de communication quantique (SQKD) configurée pour mettre en œuvre un canal de communication (CQu) optique unidirectionnel en espace libre avec le satellite, la station de communication quantique étant reliée au centre de mission par une liaison sécurisée (Lsec), le procédé étant **caractérisé en ce qu'**il comprend :
- une étape (401) d'échange quantique d'au moins une clé secrète (CQj) entre le satellite et le centre de mission en utilisant le canal de communication optique unidirectionnel de la station de communication quantique, et
- une étape (402) de transmission d'au moins un fichier de clés secrètes (CSi) entre le centre de mission et le satellite, ledit fichier de clés secrètes étant chiffré par une méthode de chiffrement utilisant ladite clé secrète (CQj).

2. Procédé de transmission sécurisée selon la revendication 1, dans lequel l'étape (401) d'échange quantique d'au moins une clé secrète (CQj) entre le satellite et le centre de mission comprend l'échange de données sur un canal de protocole (CPr) radiofréquence bidirectionnel en espace libre entre le satellite et une station de télémesures télécommande (STTC) reliée au centre de mission.

3. Procédé de transmission sécurisée selon la revendication 1, dans lequel l'étape (401) d'échange quantique d'au moins une clé secrète (CQj) entre le satellite et le centre de mission comprend l'échange de données sur un canal de protocole (CPr) optique bidirectionnel en espace libre entre le satellite et la station de communication quantique (SQKD).

4. Procédé de transmission sécurisée selon l'une des revendications 1 à 3, , le procédé comprenant en outre :
- une étape (403) de chiffrement des données à transmettre par le satellite par une méthode de chiffrement utilisant une ou plusieurs clés secrètes dudit fichier de clés secrètes, et de transmission des données chiffrées vers le centre de mission.

5. Satellite (SAT) dans un système satellitaire comprenant au moins un satellite, un centre de mission (CM), une station de communication quantique (SQKD) reliée au centre de mission par une liaison sécurisée (Lsec), et une station de télémesures instrument (STMI) reliée au centre de mission, **caractérisé en ce qu'**il comprend :
- des moyens (MQu) pour la mise en œuvre d'un canal quantique unidirectionnel (CQu) avec la station de communication quantique (SQKD) par une liaison optique en espace libre,
- des moyens (MRF, MQu) pour la mise en œuvre d'un canal de protocole (CPr) avec une station de télémesures télécommande (STTC) reliée au centre de mission ou avec la station de communication quantique (SQKD) par une liaison bidirectionnelle en espace libre,
les moyens (MQu) pour la mise en œuvre d'un canal quantique unidirectionnel et les moyens (MRF, MQu) pour la mise en œuvre d'un canal de protocole étant configurés pour permettre l'échange quantique d'au moins une clé secrète (CQj) avec le centre de mission,
- des moyens (MRF) pour la mise en œuvre d'un canal de clés (CCI) par une liaison en espace libre, configurés pour permettre la réception d'au moins un fichier de clés secrètes chiffré transmis par le centre de mission, et des moyens (OBC) de déchiffrement dudit au moins un fichier de clés secrètes chiffré,
- des moyens (MTMI) pour la mise en œuvre d'un canal de données (CDo) avec la station de télémesures instrument par une liaison en espace libre, configurés pour permettre le chiffrement et la transmission de données vers le centre de mission,
le satellite étant configuré pour mettre en œuvre un procédé de transmission sécurisée selon la revendication 4 avec le centre de mission.

6. Satellite selon la revendication 5, comprenant des moyens (Sel) permettant le partage d'une liaison optique en espace libre entre le canal quantique (CQu) et le canal de données (CDo).

7. Satellite selon l'une des revendications 5 et 6, dans lequel les moyens (MQu) pour la mise en œuvre d'un canal de protocole (CPr) comprennent des moyens de modulation/démodulation de balises de pointage destinés à l'orientation d'un télescope du satellite et de télescopes des stations terrestres.

8. Composante sol pour réseau satellitaire comprenant un centre de mission (CM) configuré pour déchiffrer des données transmises par un satellite, et une station de télémesures instrument (STMI) configurée pour mettre en œuvre d'un canal de données (CDo) avec le satellite par une liaison en espace libre, recevoir des données transmises par le satellite et transmettre lesdites données transmises par le satellite au centre de mission par un réseau terrestre, **caractérisé en ce que** :
- la composante sol comprend en outre une station de communication quantique (SQKD) configurée pour mettre en œuvre un canal de communications (CQu) optique unidirectionnel en espace libre avec le satellite permettant l'échange quantique d'au moins une clé secrète avec le satellite, et pour transmettre ladite au moins une clé secrète au centre de mission à travers une liaison de communications sécurisée,
- le centre de mission comprend des moyens permettant le chiffrement d'au moins un fichier de clés secrètes par une méthode de chiffrement utilisant ladite au moins une clé secrète,
- la composante sol comprend des moyens de transmission dudit au moins un fichier de clés secrètes vers le satellite,
la composante sol étant configurée pour mettre en œuvre un procédé de transmission sécurisée selon la revendication 4 avec le satellite.

9. Composante sol pour réseau satellitaire selon la revendication 8, dans laquelle les moyens de transmission dudit au moins un fichier de clés secrètes vers le satellite comprennent une station de télémesures télécommande (STTC) configurée pour mettre en œuvre un canal de clés (CCI) par une liaison en espace libre avec le satellite.

10. Composante sol pour réseau satellitaire selon la revendication 8, dans laquelle les moyens de transmission dudit au moins un fichier de clés secrètes vers le satellite comprennent des moyens de modulation/démodulation de balises de pointage destinées à l'orientation d'un télescope de la station de communication quantique (SQKD) configurés pour permettre la mise en œuvre d'un canal de clés (CCI) par une liaison en espace libre avec le satellite.

11. Réseau satellitaire comprenant un satellite selon l'une des revendications 5 à 7 et une composante sol pour réseau satellitaire selon l'une des revendications 8 à 10.
